# EUROPÄISCHE PATENTANMELDUNG

(11) **EP 2 275 220 A1**
(43) Veröffentlichungstag der Anmeldung: **19.01.2011**
(21) Anmeldenummer: 10169059.2
(22) Anmeldetag: 09.07.2010
(51) Int. Cl.: B23K 9/04, B23K 26/34, F01D 5/28, B23K 26/14, B23K 35/30, B32B 15/01

(54) **Verfahren zur Panzerung von Bauteilen aus einem TiAl-Basiswerkstoff, sowie entsprechende Bauteile**

(30) Priorität: 10.07.2009 DE 102009032564
(71) Anmelder: MTU Aero Engines GmbH, 80995 München (DE)
(72) Erfinder: Jakimov, Andreas, 81245 München (DE); Richter, Karl-Hermann, 85229 Markt Indersdorf (DE)

(57) **Zusammenfassung**

Die vorliegende Erfindung betrifft ein Verfahren zur Panzerung von Bauteilen aus einem Basiswerkstoff (10), der überwiegend Titan und Aluminium umfasst, wobei auf dem Basiswerkstoff eine Zwischenschicht (11)aus einer Ni-Legierung aufgebracht wird und auf der Zwischenschicht eine Panzerung (12)mit einer Ni-Basis-Superlegierung, Co-Basis-Superlegierung, Co-Cr-Legierung vorgesehen wird und entsprechende Bauteile.

## Beschreibung

### GEBIET DER ERFINDUNG

Die vorliegende Erfindung betrifft ein Verfahren zur Panzerung von Bauteilen aus einem Basiswerkstoff, der überwiegend Titan und Aluminium umfasst, sowie entsprechende Bauteile, insbesondere Turbinenschaufeln, vorzugsweise Niederdruckturbinenschaufeln.

### STAND DER TECHNIK

Bei Gasturbinen und insbesondere auch Flugturbinen sind Niederdruckturbinenschaufeln bekannt, bei denen an der Schaufelspitze ein Deckband vorgesehen ist. Die auf einer Turbinenscheibe bzw. einer entsprechenden Welle oder Nabe nebeneinander angeordneten Turbinenschaufeln sind am Deckband über sogenannte Z-Kerben miteinander verzahnt. Dort kann es zu einer gegenseitigen Bewegung der Deckbänder bzw. Turbinenschaufeln kommen, so dass an den Kontaktflächen eine Panzerung vorgesehen werden muss, um den Verschleiß zu minimieren. Aus der EP 1 643 011 A1 ist ein Verfahren zur Herstellung einer Panzerung an einer Kontaktfläche an einer Z-Kerbe für eine Turbinenschaufel aus einer Nickel-Basis-Superlegierung bekannt. Allerdings werden aus Gewichtsgründen verstärkt Turbinenschaufeln, insbesondere Niederdruckturbinenschaufeln aus Titan-Aluminium-Werkstoffen verwendet, bei denen jedoch die Aufbringung einer Panzerung aus einer Hartlegierung dazu führen kann, dass Risse in der Panzerung und/oder im Grundwerkstoff entstehen. Dies kann jedoch zu einer Beschädigung der Turbinenschaufeln führen, so dass eine derartige Rissbildung nicht akzeptabel ist.

### OFFENBARUNG DER ERFINDUNG

### AUFGABE DER ERFINDUNG

Es ist deshalb Aufgabe der vorliegenden Erfindung ein Verfahren zur Panzerung von Bauteilen aus TiAl-Werkstoffen insbesondere von Z-Kerben von TiAl-Niederdruckturbinenschaufeln, sowie entsprechende Niederdruckturbinenschaufeln bzw. allgemein Bauteile bereitzustellen, die die Nachteile des Standes der Technik nicht aufweisen. Es soll somit ein Verfahren zur Panzerung von TiAl-Bauteilen bereitgestellt werden, welches die Eigenschaften des TiAl-Bauteils nicht beeinträchtigt, einfach durchführbar ist und eine Panzerung für einen entsprechenden Verschleißschutz bereitstellt, die den Anforderungen insbesondere beim Einsatz der Bauteile in Flugturbinen genügt.

### TECHNISCHE LÖSUNG

Diese Aufgabe wird gelöst mit einem Verfahren mit den Merkmalen des Anspruchs 1 und einem Bauteil mit den Merkmalen des Anspruchs 5. Vorteilhafte Ausgestaltungen sind Gegenstand der abhängigen Ansprüche.

Gemäß der Erfindung wird auf einem Bauteil mit einem Basiswerkstoff aus Titan und Aluminium eine Zwischenschicht aus einer Nickellegierung vorgesehen, auf welcher eine Panzerung, insbesondere eine Panzerung mit einer Nickel-Basis-Superlegierung, Kobalt-Basis-Superlegierung oder einer Kobalt-Chrom-Legierung bzw. allgemein einer Hartstoff- oder Hartmetalllegierung vorgesehen wird. Durch das Vorsehen einer Zwischenschicht wird vermieden, dass bei der Aufbringung der Panzerung, also der Hartlegierung, ein Aufschmelzen des TiAl-Basiswerkstoffs und eine Durchmischung des TiAl-Basiswerkstoffs mit der Panzerung erfolgt und somit keine spröden Phasen und daraus resultierende Risse in der Schicht bzw. im Grundwerkstoff entstehen.

Entsprechend kann die Zwischenschicht vorzugsweise durch Kaltgasspritzen bzw. kinetisches Kaltgasspritzen (K3) aufgebracht werden, da bei diesem Verfahren nur relativ niedrige Prozesstemperaturen erforderlich sind, so dass die TiAl-Werkstoffbberfläche nicht aufgeschmolzen wird. Beim Kaltgasspritzen werden nämlich die aufzubringenden Materialien mit hoher Geschwindigkeit auf die Oberfläche beschleunigt, so dass durch eine Verformung der auftreffenden Partikel auf der Werkstoffoberfläche eine fest haftende Beschichtung entsteht. Entsprechend weist eine derart aufgebrachte Zwischenschicht eine hohe Haftzugfestigkeit auf, insbesondere eine höhere Haftzugfestigkeit als Schichten, die durch thermische Spritzverfahren aufgebracht werden.

Auf der Nickellegierung, die als Zwischenschicht aufgebracht wird, kann die Panzerung durch Auftragsschweißen und insbesondere Laser-Pulver-Auftragsschweißen aufgebracht werden, da der TiAl-Basiswerkstoff durch die Zwischenschicht geschützt ist und beim Auftragsschweißen lediglich eine teilweise Aufschmelzung der Zwischenschicht stattfindet. Insbesondere können entsprechend die Schweißparameter und insbesondere die Schweißtemperatur beim Auftragsschweißen so gewählt werden, dass nur die Zwischenschicht teilweise aufschmilzt, jedoch nicht der TiAl-Werkstoff des Bauteils.

Die Panzerung kann aus einem geeigneten Werkstoff mit entsprechend hoher Härte und Verschleißfestigkeit gebildet sein, wie beispielsweise Nickel-Basis-Superlegierungen, Kobalt-Basis-Superlegierungen oder Kobalt-Chrom-Legierungen bzw. anderen Hartlegierungen. Die Kobalt-Chrom-Legierungen können insbesondere einen hohen Kohlenstoffanteil zur Bildung von Karbiden aufweisen. Andere Hartlegierungen enthalten entsprechend hohe Anteile an Chrom, Wolfram, Nickel, Molybdän und Kohlenstoff um entsprechende Karbide zu bilden. Insbesondere können Hartlegierungen der Firma Deloro Stellite Holdings Co. mit der Markenbezeichnung Stellite eingesetzt werden.

Unter Kobalt-Chrom-Legierungen sind insbesondere Legierungen zu verstehen, deren größte Anteilskomponenten durch Kobalt und Chrom gebildet werden, währen bei Nickel-Basis- und Kobalt-Basis-Superlegierungen der größte Anteil durch Nickel oder Kobalt gebildet ist.

Die Nickellegierung der Zwischenschicht kann insbesondere eine Nickel-Knet-Legierung sein, welche eine ausreichend gute Duktilität aufweist, so dass beim kinetischen Kaltgasspritzen eine gute Verformbarkeit der aufgespritzten Partikel gegeben ist. Darüber hinaus kann die Nickel-Knet-Legierung eine gute Schmelzschweißbarkeit aufweisen, so dass eine gute Vermischung mit der Panzerung durch zumindest teilweises Aufschmelzen der Zwischenschicht gewährleistet ist. Entsprechend kann die Zusammensetzung durch die Eigenschaften der Legierungen, wie z.B. das lediglich teilweise Aufschmelzen der Zwischenschicht beim Auftragsschweißen der Panzerung definiert sein.

Der Basiswerkstoff kann ein Titan-Aluminium-Werkstoff, der überwiegend Titan und Aluminium umfasst, d.h. die Summe aus Titan und Aluminium umfasst wenigstens 50 % Gewichts- oder Volumenanteil. Insbesondere kann es sich bei dem Basiswerkstoff jedoch um ein Titanaluminid bzw. eine Titanaluminid-Legierung handeln mit der Grundzusammensetzung TiAl, Ti₃Al oder TiAl₃. Entsprechende Legierungen weisen somit einen überwiegenden Anteil an den intermetallischen Phasen TiAl, Ti₃Al oder TiAl₃ oder anderen intermetallischen TiAl-Phasen auf.

Die Dicke der Zwischenschicht kann 0,2 bis 1,5 mm, insbesondere 0,3 bis 1 mm im Rohzustand wie aufgetragen oder im bearbeiteten Zustand nach einer Oberflächenbearbeitung betragen.

Die Panzerung kann eine Schichtdicke von 0,5 bis 2,5 mm, insbesondere 1 bis 2 mm aufweisen, und zwar ebenfalls im abgeschiedenen Zustand oder nach einer Oberflächenbearbeitung.

Wie bereits erwähnt kann das Verfahren insbesondere für die Panzerung einer Turbinenschaufel, insbesondere Niederdruckturbinenschaufel und hier insbesondere an der Z-Kerbe eines Deckbandes eingesetzt werden, so dass auch entsprechende Bauteile von der Erfindung umfasst sind.

### DETAILLIERTE BESCHREIBUNG

Weitere Vorteile, Kennzeichen und Merkmale der vorliegenden Erfindung werden bei der nachfolgenden detaillierten Beschreibung eines Ausführungsbeispiels anhand der beigefügten Zeichnungen deutlich. Die Zeichnungen zeigen hierbei in rein schematischer Weise in
- Fig.1: eine Draufsicht auf eine Niederdruckturbinenschaufel gemäß der vorliegenden Erfin- dung; und in
- Fig.2: eine Schnittansicht durch die Panzerung auf den Kontaktflächen 7, 8 aus Figur 1.

### AUSFÜHRUNGSBEISPIEL

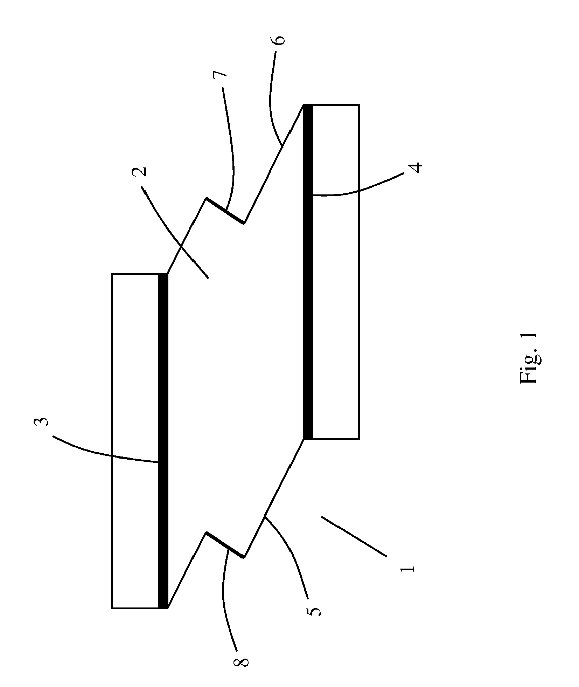

Figur 1 zeigt eine Draufsicht auf das Deckband 2 einer Niederdruckturbinenschaufel 1, wie sie bei Gasturbinen und insbesondere Flugturbinen zum Einsatz kommt. Entsprechende Turbinenschaufeln sind auf Wellen bzw. Scheiben oder Naben umlaufend nebeneinander angeordnet, um einen Rotor zu bilden. Hierbei sind die nebeneinander liegenden Turbinenschaufeln am äußeren Deckband über sogenannte Z-Kerben 5, 6 gegenseitig verzahnt. An diesen Z-Kerben, die die gegenseitige Anlageflächen für die Deckbänder der benachbarten Turbinenschaufeln darstellen, sind Kontaktflächen 7, 8 ausgebildet, bei denen es aufgrund einer gegenseitigen Bewegung der benachbarten Deckbänder bzw. Turbinenschaufeln zu einem Abrieb und somit zu Verschleiß kommen kann. Entsprechend sind die Kontaktflächen 7, 8 mit einer Panzerung versehen, um den Verschleiß zu minimieren. Die Ausbildung entsprechender Turbinenschaufeln mit Deckband und Z-Kerben-Verzahnung ist auch in der europäischen Patentanmeldung EP 1 643 011 A1 beschrieben.

Auf der Oberseite des Deckbands 2 sind Dichtlippen 3 und 4 vorgesehen, die für eine Abdichtung des Rotors gegenüber einem umgebenden Gehäuse eingesetzt werden.

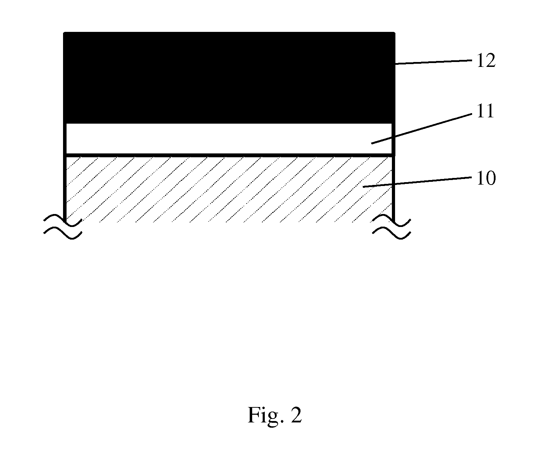

Erfindungsgemäß wird für eine Turbinenschaufel aus einem TiAl-Werkstoff ein zweischichtiger Aufbau der Panzerung gewählt, wie er in der Figur 2 dargestellt ist. Auf dem TiAl-Basiswerkstoff 10 ist eine Zwischenschicht 11 zwischen der an der Oberfläche befindlichen Panzerung 12 und dem TiAl-Basiswerkstoff vorgesehen.

Auf dem TiAl-Basiswerkstoff, welcher überwiegend aus Titan und Aluminium besteht und hierbei überwiegend aus einem Titanaluminid TiAl, Ti₃Al oder TiAl₃ bzw. Legierungen daraus bestehen kann, ist eine Nickel-Knet-Legierung, wie zum Beispiel Inconel 718 in der Zwischenschicht 11 vorgesehen, die gut schmelzschweißbar ist. Die Zwischenschicht weist hierbei eine Dicke, die in Richtung der Oberflächennormale gemessen wird, auf, die zwischen 0,3 und 1 mm betragen kann. Die Dicke wird hierbei im bearbeiteten Zustand gemessen, also beispielsweise nach einer Oberflächenendbearbeitung, der Zwischenschicht nach dem Auftragen, z.B. durch mechanische, insbesondere Span abhebende Bearbeitung.

Das Auftragen der Nickel-Knet-Legierung erfolgt beispielsweise durch Kaltgasspritzen, so dass lediglich niedrige Temperaturen beim Aufbringen der Nickel-Knet-Legierungen auftreten. Beim Kaltgasspritzen wird nämlich das aufzubringende Material, also hier die Nickel-Knet-Legierung, in Pulverform mit sehr hoher Geschwindigkeit auf den zu beschichtenden Werkstoff beschleunigt, so dass sich durch die Verformung der Pulverpartikel beim Auftreffen eine fest haftende Schicht ausbildet, ohne dass hohe Temperaturen, beispielsweise bis zum Aufschmelzen des Materials nötig wären. Entsprechend bietet die Knetlegierung, die eine ausreichende Duktilität gewährleistet, eine entsprechend gute Voraussetzung für die Aufbringung mittels Kaltgasspritzen bzw. kinetischem Kaltgasspritzen.

Anschließend wird auf die Zwischenschicht 11 die Panzerung 12 aufgebracht, wobei die Schicht entsprechend durch Auftragsschweißen aufgebracht werden kann. Da die Nickel-Knet-Legierung neben ihrer Duktilität auch eine gute Schmelzsschweißbarkeit aufweist, kann beim Auftragsschweißen eine gut haftende Panzerung aufgebracht werden. Insbesondere kann die Panzerung durch Laser-Pulver-Auftragsschweißen aufgebracht werden, bei welchem ein Pulver mittels eines Laserstrahls auf dem zu beschichtenden Werkstoff, also dem Basiswerkstoff mit der Zwischenschicht 11, aufgeschmolzen wird, so dass sich eine Verbindung mit dem darunter liegenden Werkstoff der Zwischenschicht 11 ergibt. Die Parameter für das Durchführen der Laser-Auftragsschweißung bzw. allgemein der Auftragsschweißung werden hierbei so gewählt, dass nur die Zwischenschicht und nicht der TiAl-Grundwerkstoff partiell aufgeschmolzen werden.

Als Panzerwerkstoff können Nickel-Basis-Superlegierungen, Kobalt-Basis-Superlegierungen oder insbesondere Hartlegierungen auf Kobalt-Chrombasis eingesetzt werden. Insbesondere Hartmetalllegierungen mit der Markenbezeichnung Stellite aber auch andere Hartmetalllegierungen können Verwendung finden. Durch einen entsprechenden Chromanteil in Verbindung mit einem hohen Kohlenstoffanteil, der für einen ausreichenden Karbidanteil in der Legierung führt, wird die erforderliche Härte der Panzerung bereitgestellt.

Obwohl die Erfindung anhand des Ausführungsbeispiels detailliert beschrieben worden ist, ist für den Fachmann selbstverständlich, dass die Erfindung nicht auf dieses Ausführungsbeispiel beschränkt ist, sondern dass vielmehr Abwandlungen im Hinblick auf eine unterschiedliche Kombination der vorgestellten Merkmale oder das Weglassen einzelner Merkmale möglich ist, ohne den Schutzbereich der beigefügten Ansprüche zu verlassen.

## Patentansprüche

1. Verfahren zur Panzerung von Bauteilen aus einem Basiswerkstoff, der überwiegend Titan und Aluminium umfasst,
**dadurch gekennzeichnet, dass**
auf dem Basiswerkstoff (10) eine Zwischenschicht aus einer Ni-Legierung aufgebracht wird und auf der Zwischenschicht (11) eine Panzerung (12) vorgesehen wird.

2. Verfahren nach Anspruch 1,
**dadurch gekennzeichnet, dass**
die Panzerung mit einer Ni-Basis-Superlegierung, Co-Basis-Superlegierung und/oder Co-Cr-Legierung aufgebracht wird.

3. Verfahren nach Anspruch 1 oder 2,
**dadurch gekennzeichnet, dass**
die Zwischenschicht (11) durch Kaltgasspritzen aufgebracht wird.

4. Verfahren nach einem der vorhergehenden Ansprüche,
**dadurch gekennzeichnet, dass**
die Panzerung (12) durch Auftragsschweißen aufgebracht wird.

5. Verfahren nach Anspruch 4,
**dadurch gekennzeichnet, dass**
die Panzerung (12) durch Laser-Pulver-Auftragsschweißen aufgebracht wird.

6. Verfahren nach Anspruch 4 oder 5,
**dadurch gekennzeichnet, dass**
die Schweißtemperatur beim Auftragsschweißen so gewählt wird, dass nur die Zwischenschicht (11) teilweise aufschmilzt, jedoch nicht das Bauteil.

7. Verfahren nach einem der vorhergehenden Ansprüche,
**dadurch gekennzeichnet, dass**
die Zwischenschicht (11) eine schmelzschweißbare Ni-Knetlegierung umfasst und/oder mit einer Dicke von 0,2 bis 1,5 mm, insbesondere 0,3 bis 1 mm aufgebracht wird und/oder die Panzerung (12) mit einer Schichtdicke von 0,5 bis 2,5 mm, insbesondere 1 bis 2 mm abgeschieden wird und/oder der Basiswerkstoff (10) aus einem Titanaluminid, TiAl, Ti₃Al, TiAl₃ oder einer Legierung daraus gebildet ist.

8. Bauteil aus einem Basiswerkstoff (10), der überwiegend Titan und Aluminium umfasst,
**gekennzeichnet durch**
eine Panzerung (12) und eine Zwischenschicht (11), die zwischen Panzerung und Basiswerkstoff angeordnet ist und aus einer Ni-Legierung gebildet ist.

9. Bauteil nach Anspruch 8,
**dadurch gekennzeichnet, dass**
die Panzerung eine Ni-Basis-Superlegierung, Co-Basis-Superlegierung und/oder Co-Cr-Legierung aufweist.

10. Bauteil nach Anspruch 8 oder 9,
**dadurch gekennzeichnet, dass**
die Zwischenschicht (11)eine Dicke von 0,2 bis 1,5 mm, insbesondere 0,3 bis 1 mm aufweist.

11. Bauteil nach einem der Ansprüche 8 bis 10,
**dadurch gekennzeichnet, dass**
die Panzerung (12) eine Schichtdicke von 0,5 bis 2,5 mm, insbesondere 1 bis 2 mm aufweist.

12. Bauteil nach einem der Ansprüche 8 bis 11,
**dadurch gekennzeichnet, dass**
die Zwischenschicht (11) eine schmelzschweißbare Ni-Knetlegierung umfasst.

13. Bauteil nach einem der Ansprüche 8 bis 12,
**dadurch gekennzeichnet, dass**
der Basiswerkstoff (10) aus einem Titanaluminid, TiAl, Ti₃Al, TiAl₃ oder einer Legierung daraus gebildet ist.

14. Bauteil nach einem der Ansprüche 8 bis 13,
**dadurch gekennzeichnet, dass**
das Bauteil eine Turbinenschaufel (1), insbesondere Niederdruckturbinenschaufel ist.

15. Bauteil nach einem der Ansprüche 8 bis 14,
**dadurch gekennzeichnet, dass**
die Panzerung (12)an einer Verschleißfläche eines Deckbandes (2), insbesondere einer Z-Kerbe (5,6) angeordnet ist.
